# EUROPEAN PATENT SPECIFICATION

(11) **EP 4 202 766 B1**
(45) Date of publication and mention of the grant of the patent: **04.06.2025**
(21) Application number: 22214536.9
(22) Date of filing: 19.12.2022
(51) Int. Cl.: G06M 7/06, G06M 3/02, G01D 5/02

(54) **SYSTEM AND METHOD FOR COUNTING CORRUGATIONS IN A FLEXIBLE MATERIAL**
SYSTEM UND VERFAHREN ZUM ZÄHLEN VON WELLEN IN EINEM FLEXIBLEN MATERIAL
SYSTÈME ET PROCÉDÉ DE COMPTAGE D'ONDULATIONS DANS UN MATÉRIAU SOUPLE

(30) Priority: 23.12.2021 NL 2030264
(43) Date of publication of application: 28.06.2023
(73) Proprietor: Coulisse B.V., 7468 DC Enter (NL)
(72) Inventor: DE VRIES, Ruben Hubert Jan, 6905 AK Zevenaar (NL); KLEIN TUENTE, Bastiaan Franciscus, 7141 LB Groenlo (NL); JUSUFOVIC, Sasa, 6372 BN Landgraaf (NL); JANSSENS, Maarten Petrus Maria, 6285 BA Epen (NL)
(74) Representative: Mink-Lindenburg, Charlotte Hildegard

(56) References cited:
- JP-A- 2014 002 701
- US-A- 3 935 997
- US-A1- 2020 132 506

## Description

The invention relates to a system and method for counting corrugations in a flexible material, for example pleats in a fabric for window coverings, such as a pleated curtain.

It is an object of the invention to make the production process of customising an individual fabric package for window coverings proceed faster and more reliably. For pleated curtains this production process comprises the production step of counting the necessary number of pleats or folds per fabric package. In practice, this is done manually. It is very time-consuming to do this accurately.

The system mentioned in the preamble of independent claim 1 is provided with a carrier with a surface for positioning the flexible material, a light source for illuminating the flexible material on the carrier, receiving means for receiving light originating from the flexible material, counting means for determining the number of corrugations in the flexible material based on data from the receiving means.

Such a system is known from US 3,935,997. The known system comprises an endless feed belt for supply of pleated material for lamp shades from a roll past an assembly that counts the pleats in the passing material. The counting takes place by means of a photocell that captures light reflections from the pleats and a detector that converts the light reflections into pulses, which are counted. An operator keeps on marking the passing material manually when reaching the desired number of pulses, which is a measure of the number of pleats.

The known system is not suitable for customising individual fabric packages for window coverings.

The system according to claim 1 is thereto characterized in that the carrier is provided with a measuring area and with aligning means for aligning the flexible material in the measuring area, in that the receiving means comprise a camera for making one or more image recordings of the measuring area and in that the counting means comprise a processor, which is arranged for counting the number of corrugations in one or more of the image recordings, wherein the system is further provided with means for displaying the number of counted corrugations in the flexible material in the measuring area. The method according to the present invention thereto comprises the following steps:
a) Positioning and spreading of at least a part of the flexible material in a measuring area on a carrier;
b) Illuminating the measuring area;
c) Making an image recording of the measuring area;
d) Analysing the image recording; and
e) Counting the number of corrugations in the image recording;
f) Displaying the counted number of corrugations;
g) Repeating the steps a) up until f) until the desired number of corrugations corresponds to the counted number of corrugations.

The system and the method according to the invention offer an operator the opportunity to customise fabric packages for window coverings separately by counting the number of pleats dynamically.

Examples of suitable display means are a screen or a counter. The operator then receives direct feedback from the system of the situation at that moment.

In a first preferred embodiment of the system according to the invention, the processor is arranged for analysing the contrast between the flexible material and the measuring area in an image recording. The first preferred embodiment makes it possible to measure corrugations in various kinds of flexible materials, among which multi-layer fabrics, such as honeycomb pleats.

According to a further preferred embodiment of the system according to the invention, the measuring area comprises light-permeable material and the light source forms a backlight source for the camera. This increases the contrast between the flexible material and the measuring area in the image recording further.

In an elegant elaboration hereof with optimal contrast, the light source and the camera are arranged on opposite sides of the measuring area. In a practical preferred embodiment of the system according to the invention, the camera is accommodated in a housing, which housing is arranged on the surface of the carrier. The camera is now always in an aligned position with respect to the measuring area on the carrier.

In a subsequent preferred embodiment of the system according to the invention, the aligning means comprise a stop, which defines a corner in the measuring area. When the flexible material lies against such a stop, a part of the measuring area automatically remains free, such that a contrast with the flexible material is always visible in the image recordings.

In another preferred embodiment, the system according to the invention is further provided with marking tools for marking a line on the surface. Preferably, the marking tools are arranged for projecting the line. The line serves as borderline for the measuring area and/or as cutting line. The operator can directly cut the flexible material with the desired number of corrugations to size along the cutting line.

In a very precise preferred embodiment of the system according to the invention with above-mentioned stop, the marking tools for projecting the line are arranged for projecting the line along one of the legs of the corner of the stop.

In an optimal preferred embodiment of the system according to the invention, the processor is arranged for carrying out the following steps:
- Increasing the contrast between the flexible material and the measuring area in an image recording of the camera;
- Determining a contour line in the image recording, which follows the corrugations along an edge of the flexible material in the image recording;
- Determining the coordinates of the peaks of the contour line;
- Counting the number of peaks in the image recording as a measure of the number of corrugations; and
- Displaying the counted number of peaks as a measure of the number of corrugations.

Due to these steps, the system can measure the number of corrugations very accurately, even with very translucent material, stains, patterns and/or colour gradient in the flexible material.

In a further elaboration of the system, the last step preferably takes place by the processor being arranged for carrying out the step of displaying an image recording, wherein the counted corrugations are marked. The operator can now check at a glance whether all present corrugations have actually been counted.

The invention also relates to a computer program comprising instructions to let the system according to the invention carry out at least the steps b) up until f) of the method according to the invention.

The invention will now be explained in more detail with reference to the figures, wherein
Figure 1 shows a schematic view of a preferred embodiment of the system according to the invention;
Figure 2 shows a side view of the system from figure 1 in cross-section;
Figure 3 shows a schematic display of a part of the system from figure 1;
Figure 4 shows an image recording of the flexible material, which is made using the system according to the invention;
Figure 5 shows the image recording from figure 4 after editing; and
Figure 6 shows the image recording from figure 5 with contour; and
Figure 7 shows a display on a screen as part of the system from figure 1.

Equal reference numbers in the different figures refer to equal parts.

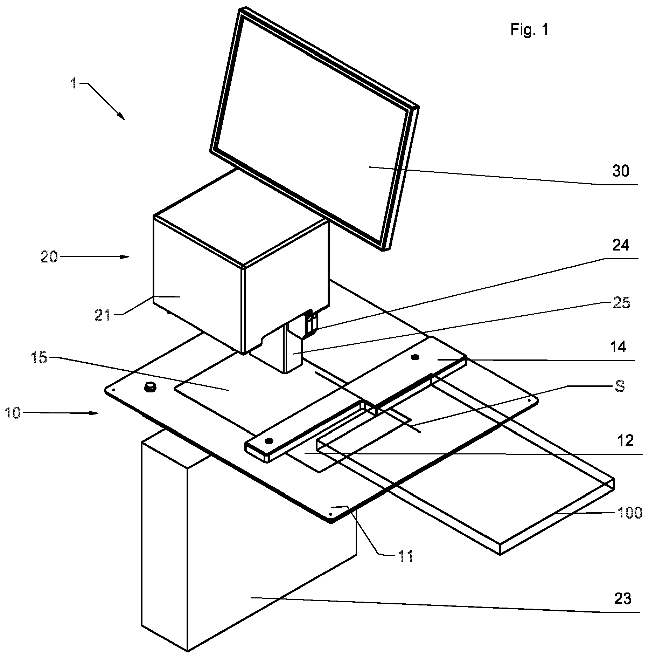

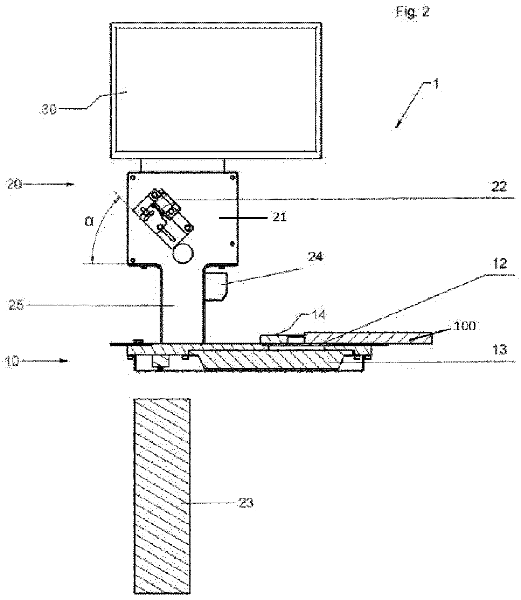

Figure 1 shows a schematic view of a system 1 according to the invention in a preferred embodiment. Figure 2 shows a side view of the system 1 in cross-section. The system 1 is arranged for counting corrugations in a flexible material, for example pleats in a fabric of a window covering 100. The system 1 is thereto provided with a carrier 10 for positioning the flexible material 100. In the shown preferred embodiment, the carrier 10 comprises a substantially flat surface 11, on which a measuring area 12 is defined.

The system 1 is provided with a light source 13 for illuminating the measuring area 12 on the carrier 10.

The system 1 is further provided with a system 20 for receiving and analysing light originating from the flexible material 100 for counting the number of pleats in (a part of) the flexible material.

In the shown preferred embodiment, the flexible material is a fabric with pleats for a window covering, such as a pleated curtain or pleated blind. This includes all pleated fabrics known in the art with different pleat widths, among which the standard dimensions of 20, 25, 32 or 45 mm.

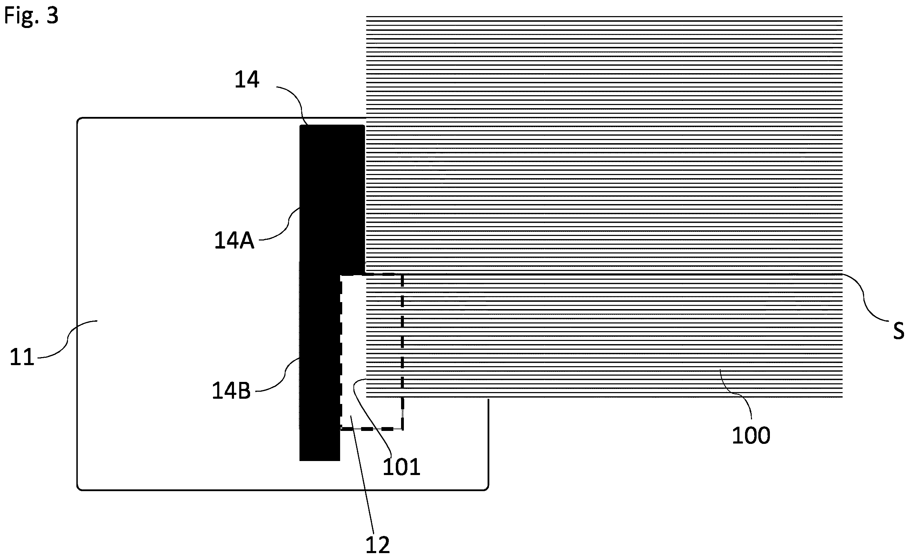

Figure 3 shows a schematic display of a part of the carrier 10 with a pleated curtain fabric 100. The system 1 further comprises aligning means for aligning the fabric 100 in the measuring area 12 on the carrier 10. In the shown preferred embodiment, the aligning means comprise a stop 14 for aligning an edge 101 of the fabric. The aligning means also define the measuring area 12.

Preferably the stop 14 is fixed on the carrier 10. In the shown preferred embodiment, the stop 14 adjoins the measuring area 12. In the shown preferred embodiment, the stop 14 delimits a corner of the measuring area 12. The stop 14 has a wider part 14A for aligning the pleated curtain fabric 100 and a smaller part 14B which borders on the measuring area 12. In use of the system 1, the measuring area 12 is partly covered by the flexible material 100 due to the stop 14.

A screen 30 is provided for displaying the number of pleats that is present in the measuring area 12 at a certain moment.

The screen preferably has a touchscreen. The screen can be part of the operating means.

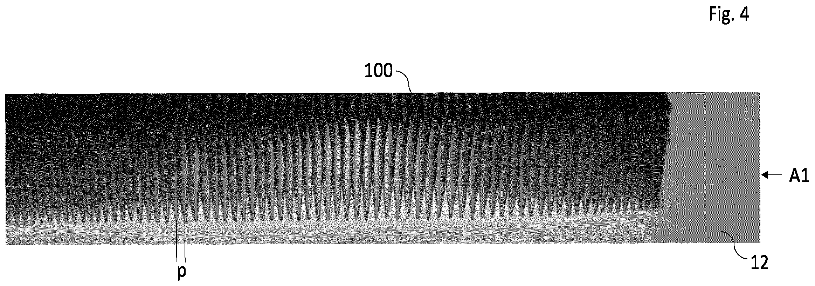

The system 20 comprises light-receiving means for receiving the light originating from the flexible material. In the shown preferred embodiment, the light-receiving means comprise a camera 22 for making image recordings of the measuring area 12 with the fabric. An example of such an image recording or image A1 is shown in figure 4. The system 20 comprises a processor 23 for counting the number of pleats by analysing the image recordings.

According to the invention, the processor is arranged for analysing the contrast in the image recordings between an edge 101 of the fabric 100 and the measuring area 12. According to the invention, the light source 13 forms a backlight source for the camera 22. In the shown preferred embodiment, the measuring area 12 is light-permeable and the light source 13 and the camera 22 are positioned on opposite sides of the measuring area 12 of the carrier 10.

A suitable light source is a LED-light. A suitable, light-permeable material for the measuring area 12 is hardened glass, for example borosilicate glass.

Figure 4 illustrates an image recording A1 of the measuring area 12 with the fabric 100 made using the camera 22. The pleats P that need to be counted are clearly visible. The processor 23 is arranged for counting the number of pleats P and carries out the following steps.

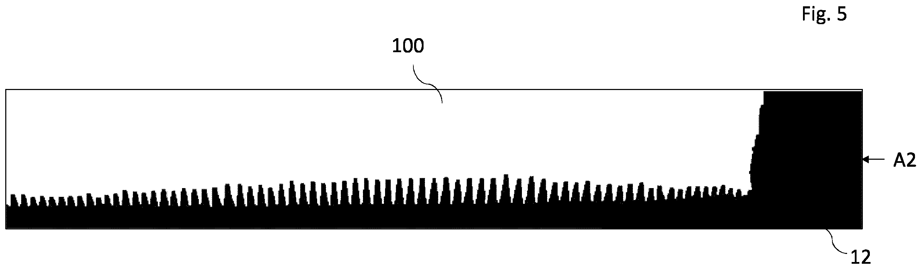

In a first step, the contrast between the fabric and the background, which is formed in system 1 by the measuring area 12, is made clearer. Suitable image processing techniques, especially contrast-increasing image processing techniques, are hereto known in the relevant art and available for a person skilled in the art. Preferably a so-called binary image recording A2 is made, wherein the fabric is displayed in a certain colour and the background in a different colour, for example black. Figure 5 shows an example of such an image recording A2.

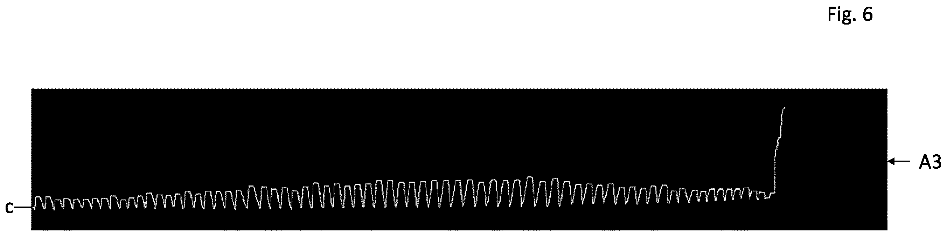

In a second step, a contour line C is determined, which follows the edge of the fabric with pleats. In order to illustrate, figure 6 shows an image recording A3, wherein the contour C is displayed. The contour C is determined as an x y chart, whereby for each x-coordinate the associated y-coordinate is determined by searching for the transition between the background (the measuring area 12) and the fabric 100. Subsequently, in the contour C the coordinates of the peaks of the contour C, which correspond with the pleats, are determined. Suitable algorithms for this are known in the relevant art and available for a person skilled in the art.

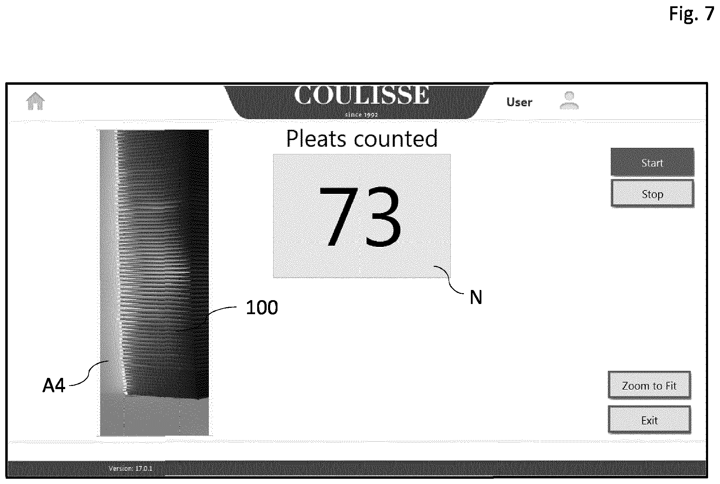

The processor 23 counts the number of peaks N and visualises this number. In the system 1, the number N is displayed on the screen 30. Optionally, the peaks are marked in an image recording A4. This provides a user the option for a visual check to determine that all present pleats have been found and counted. Figure 7 shows a screenshot of the screen 30 of the system 1 with an example of an image recording A4.

The system 1 displays the number of pleats dynamically. The user can slide the fabric over the carrier 10 in order to vary the number of pleats in the measuring area 12 until the desired number of pleats has been reached. The camera 22 preferably makes sufficient image recordings per unit of time to give the user the impression that the counting and the display of the number of pleats N takes places in real-time. In the preferred embodiment, a camera that depicts 17 frames per seconds is suitable. The system optionally comprises marking tools for marking the line S on the surface 11. The line S preferably runs over the transition between part 14A and 14B of the stop 14. The line S defines the measuring area 12. The line S forms an upper limit on the fabric 100 for the measured pleats of the fabric 100 and at the same time serves as cutting line. When the desired number of pleats has been reached, the fabric can be cut along the line S, for example by the operator. In the shown preferred embodiment, the marking tools comprise projection means 24, for example a laser, for temporary and contactless indication of the line S.

The system 1 is provided with suitable operating means. In the shown preferred embodiment, the screen 30 is a touchscreen with, for example, operating buttons, such as 'start' and 'stop'. By means of these operating buttons or alternative, mechanical operating means, such as a push button or a foot pedal, the operator can manually control the measurement. Optionally, the system can start automatically upon presenting the fabric in the measuring area.

In the shown preferred embodiment, the system 20 comprises a housing 21, wherein the camera 22 is accommodated. The marking tools 24 are fixed to the housing 21. The housing 21 is provided with a stand 25, which is fixed on the surface 11 of the carrier 10. Optionally, a mounting plate 15 is hereto provided.

The camera 22 is, with respect to the measuring area 12, set up obliquely on the carrier 10. The camera 22 makes optimal image recordings of the measuring area at a camera angle α, wherein 40 < α < 50 degrees, preferably α = 45, wherein all corrugations are clearly visible.

In the shown preferred embodiment, the system 1 can be fixed on a larger work top by means of the carrier 10. The carrier 10 can for example be integrated in a suitable work top. The processor 23 can for example be placed under the work top. The screen 30 can for example stand on the housing 21.

The present invention is based on the inventive idea of making a dynamic counting of the number of corrugations in a flexible material possible for all kinds of materials by carrying out a contrast measurement. The invention hereto provides a contrast analysing system and a method for the usage of the system. The above-mentioned contrast-increasing measures, both separately as in combination, contribute to the pleats being detectable even with a small light gap between them. One can think of a light gap of < 0,5 mm or even < 0,3 mm. This is advantageous in the case of a fabric package for a window covering that is usually pressed together very tightly in the packaging. The operator only needs to spread the fabric very lightly to be able to perform the counting.

The invention is naturally not limited to the described and shown preferred embodiment. Optionally, system 1 comprises for example multiple cameras 22 that each make image recordings of the measuring area. In the housing 21 two cameras can for example be accommodated adjacent to each other. The image recordings of the different cameras can be merged into an image. Suitable techniques for this, such as 'image stitching', are known in the relevant art. Usage of multiple cameras leads to a larger measuring area and makes the system according to the invention suitable for counting corrugations in flexible material with larger dimensions. The invention therefore extends to any embodiment falling within the scope of protection, such as defined in the claims and seen in the light of the preceding description and accompanying figures.

## Claims

1. System (1) for counting corrugations in a flexible material (100), the system is provided with a carrier (10) with a surface (11) for positioning the flexible material, a light source (13) for illuminating the flexible material on the carrier, receiving means for receiving light originating from the flexible material, counting means for determining the number of corrugations in the flexible material based on data from the receiving means, wherein the carrier is provided with a measuring area (12) and with aligning means for aligning the flexible material in the measuring area, **characterized in that** the receiving means comprise a camera (22) for making one or more image recordings of the measuring area and **in that** the counting means comprise a processor (23), which is arranged for counting the number of corrugations in one or more of the image recordings, wherein the system is further provided with means for displaying the number of counted corrugations in the flexible material in the measuring area.

2. System (1) according to claim 1, wherein the processor (23) is arranged for analysing the contrast between the flexible material (100) and the measuring area (12) in an image recording.

3. System (1) according to claim 1 or 2, wherein the measuring area (12) comprises light-permeable material and the light source (13) forms a backlight source for the camera (22).

4. System (1) according to claim 3, wherein the light source (13) and the camera (22) are arranged on opposite sides of the measuring area.

5. System (1) according to one of the preceding claims, wherein the camera (22) is accommodated in a housing (21), which housing is arranged on the surface (11) of the carrier (10).

6. System (1) according to one of the preceding claims, wherein the camera (22) is, with respect to the measuring area (12), set up obliquely on the carrier (10).

7. System (1) according to claim 6, wherein the camera (22) is set up at a camera angle α, wherein 40 < α < 50 degrees, preferably α = 45.

8. System (1) according to one of the preceding claims, wherein the aligning means comprise a stop (14), which defines a corner in the measuring area (12).

9. System (1) according to one of the preceding claims, wherein the system is further provided with marking tools (24) for marking a line (S) on the surface (11), preferably by means of projection.

10. System (1) according to one of the preceding claims, wherein the system is arranged for displaying the number of counted corrugations in the measuring area in real-time.

11. System according to one of the preceding claims 2-10, wherein the processor (23) is arranged for carrying out the following steps:
- Increasing the contrast between the flexible material (100) and the measuring area (12) in an image recording of the camera (22);
- Determining a contour line (C) in the image recording, which follows the corrugations along an edge of the flexible material (100) in the image recording;
- Determining the coordinates of the peaks of the contour line;
- Counting the number of peaks (N) in the image recording as a measure of the number of corrugations; and
- Displaying the counted number of peaks (N) as a measure of the number of corrugations.

12. System according to claim 11, wherein the processor (23) is arranged for carrying out the step of displaying an image recording, wherein the counted corrugations are marked.

13. Method for counting a desired number of corrugations in a flexible material,
wherein the method comprises the following steps:
a) Positioning and spreading of at least a part of the flexible material in a measuring area on a carrier;
b) Illuminating the measuring area;
c) Making an image recording of the measuring area;
d) Analysing the image recording;
e) Counting the number of corrugations in the image recording;
f) Displaying the counted number of corrugations;
g) Repeating the steps a) up until f) until the desired number of corrugations corresponds to the counted number of corrugations.

14. Method according to claim 13, wherein use is made of the system according to one of the preceding claims 1-12.

15. Computer program comprising instructions to let the system according to one of the preceding claims 1-12 carry out at least the steps b) up until f) of the method according to claim 13.

## Patentansprüche

1. System (1) zum Zählen von Wellen in einem flexiblen Material (100), wobei das System mit Folgendem bereitgestellt ist: einem Träger (10) mit einer Oberfläche (11) zum Positionieren des flexiblen Materials, einer Lichtquelle (13) zum Beleuchten des flexiblen Materials auf dem Träger, einem Aufnahmemittel zum Aufnehmen von aus dem flexiblen Material stammendem Licht, einem Zählmittel zum Bestimmen der Anzahl von Wellen in dem flexiblen Material auf Grundlage von Daten von dem Aufnahmemittel, wobei der Träger mit einem Messbereich (12) und mit einem Ausrichtungsmittel zum Ausrichten des flexiblen Materials in dem Messbereich bereitgestellt ist, **dadurch gekennzeichnet, dass** das Aufnahmemittel eine Kamera (22) umfasst, um eine oder mehrere Bildaufzeichnungen des Messbereichs zu machen, und dass das Zählmittel einen Prozessor (23) umfasst, der angeordnet ist, um die Anzahl der Wellen in einer oder mehreren der Bildaufzeichnungen zu zählen, wobei das System ferner mit einem Mittel zum Anzeigen der Anzahl von gezählten Wellen in dem flexiblen Material in dem Messbereich bereitgestellt ist.

2. System (1) nach Anspruch 1, wobei der Prozessor (23) angeordnet ist, um den Kontrast zwischen dem flexiblen Material (100) und dem Messbereich (12) in einer Bildaufzeichnung zu analysieren.

3. System (1) nach Anspruch 1 oder 2, wobei der Messbereich (12) lichtdurchlässiges Material umfasst und die Lichtquelle (13) eine Hintergrundbeleuchtungsquelle für die Kamera (22) bildet.

4. System (1) nach Anspruch 3, wobei die Lichtquelle (13) und die Kamera (22) auf gegenüberliegenden Seiten des Messbereichs angeordnet sind.

5. System (1) nach einem der vorhergehenden Ansprüche, wobei die Kamera (22) in einem Gehäuse (21) untergebracht ist, wobei das Gehäuse auf der Oberfläche (11) des Trägers (10) angeordnet ist.

6. System (1) nach einem der vorhergehenden Ansprüche, wobei die Kamera (22) in Bezug auf den Messbereich (12) schräg auf dem Träger (10) aufgestellt ist.

7. System (1) nach Anspruch 6, wobei die Kamera (22) in einem Kamerawinkel α aufgestellt ist, wobei 40 < α < 50 Grad gilt, vorzugsweise α = 45.

8. System (1) nach einem der vorhergehenden Ansprüche, wobei das Ausrichtungsmittel einen Anschlag (14) umfasst, der eine Ecke in dem Messbereich (12) definiert.

9. System (1) nach einem der vorhergehenden Ansprüche, wobei das System ferner mit Markierungswerkzeugen (24) bereitgestellt ist, um eine Linie (S) auf der Oberfläche (11) zu markieren, vorzugsweise mittels Projektion.

10. System (1) nach einem der vorhergehenden Ansprüche, wobei das System angeordnet ist, um die Anzahl von gezählten Wellen in dem Messbereich in Echtzeit anzuzeigen.

11. System nach einem der vorhergehenden Ansprüche 2-10, wobei der Prozessor (23) zum Ausführen der folgenden Schritte angeordnet ist:
- Erhöhen des Kontrasts zwischen dem flexiblen Material (100) und dem Messbereich (12) in einer Bildaufzeichnung der Kamera (22);
- Bestimmen einer Konturlinie (C) in der Bildaufzeichnung, die den Wellen entlang einer Kante des flexiblen Materials (100) in der Bildaufzeichnung folgt;
- Bestimmen der Koordinaten der Spitzen der Konturlinie;
- Zählen der Anzahl von Spitzen (N) in der Bildaufzeichnung als ein Maß für die Anzahl von Wellen; und
- Anzeige der gezählten Anzahl von Spitzen (N) als Maß für die Anzahl der Wellen.

12. System nach Anspruch 11, wobei der Prozessor (23) zum Ausführen des Schritts des Anzeigens einer Bildaufzeichnung angeordnet ist, wobei die gezählten Wellen markiert sind.

13. Verfahren zum Zählen einer gewünschten Anzahl von Wellen in einem flexiblen Material,
wobei das Verfahren die folgenden Schritte umfasst:
a) Positionieren und Verteilen mindestens eines Teils des flexiblen Materials in einem Messbereich auf einem Träger;
b) Beleuchten des Messbereichs;
c) Erstellen einer Bildaufzeichnung des Messbereichs;
d) Analysieren der Bildaufzeichnung;
e) Zählen der Anzahl von Wellen in der Bildaufzeichnung;
f) Anzeigen der gezählten Anzahl von Wellen;
g) Wiederholen der Schritte a) bis f), bis die gewünschte Anzahl von Wellen der gezählten Anzahl von Wellen entspricht.

14. Verfahren nach Anspruch 13, wobei das System nach einem der vorhergehenden Ansprüche 1-12 genutzt wird.

15. Computerprogramm, umfassend Anweisungen, um das System nach einem der vorhergehenden Ansprüche 1-12 mindestens die Schritte b) bis f) des Verfahrens nach Anspruch 13 ausführen zu lassen.

## Revendications

1. Système (1) de comptage d'ondulations dans un matériau souple (100), le système est doté d'un support (10) avec une surface (11) pour positionner le matériau souple, une source de lumière (13) pour éclairer le matériau souple sur le support, un moyen de réception pour recevoir de la lumière en provenance du matériau souple, un moyen de comptage pour déterminer le nombre d'ondulations dans le matériau souple sur la base de données provenant du moyen de réception, dans lequel le support est doté d'une zone de mesure (12) et d'un moyen d'alignement pour aligner le matériau souple dans la zone de mesure, **caractérisé en ce que** le moyen de réception comprend une caméra (22) pour réaliser un ou plusieurs enregistrements d'image de la zone de mesure et **en ce que** le moyen de comptage comprend un processeur (23), qui est agencé pour compter le nombre d'ondulations dans un ou plusieurs des enregistrements d'image, dans lequel le système est en outre doté d'un moyen d'afficher le nombre d'ondulations comptées dans le matériau souple dans la zone de mesure.

2. Système (1) selon la revendication 1, dans lequel le processeur (23) est agencé pour analyser le contraste entre le matériau souple (100) et la zone de mesure (12) dans un enregistrement d'image.

3. Système (1) selon la revendication 1 ou 2, dans lequel la zone de mesure (12) comprend un matériau perméable à la lumière et la source de lumière (13) forme une source de rétroéclairage pour la caméra (22).

4. Système (1) selon la revendication 3, dans lequel la source de lumière (13) et la caméra (22) sont agencées sur des côtés opposés de la zone de mesure.

5. Système (1) selon l'une des revendications précédentes, dans lequel la caméra (22) est logée dans un boîtier (21), lequel boîtier est agencé sur la surface (11) du support (10).

6. Système (1) selon l'une quelconque des revendications précédentes, dans lequel la caméra (22) est, par rapport à la zone de mesure (12), installée obliquement sur le support (10).

7. Système (1) selon la revendication 6, dans lequel la caméra (22) est configurée à un angle de caméra a, dans lequel 40 < a < 50 degrés, de préférence a = 45.

8. Système (1) selon l'une des revendications précédentes, dans lequel le moyen d'alignement comprend une butée (14), qui définit un coin dans la zone de mesure (12).

9. Système (1) selon l'une quelconque des revendications précédentes, dans lequel le système est en outre doté d'outils de marquage (24) pour marquer une ligne (S) sur la surface (11), de préférence au moyen d'une projection.

10. Système (1) selon l'une quelconque des revendications précédentes, dans lequel le système est agencé pour afficher le nombre d'ondulations comptées dans la zone de mesure en temps réel.

11. Système selon l'une des revendications précédentes 2 à 10, dans lequel le processeur (23) est agencé pour effectuer les étapes suivantes :
- l'augmentation du contraste entre le matériau souple (100) et la zone de mesure (12) dans un enregistrement d'image de la caméra (22) ;
- la détermination d'une ligne de contour (C) dans l'enregistrement d'image, qui suit les ondulations le long d'un bord du matériau souple (100) dans l'enregistrement d'image ;
- la détermination des coordonnées des pics de la ligne de contour ;
- le comptage du nombre de pics (N) dans l'enregistrement d'image en tant que mesure du nombre d'ondulations ; et
- l'affichage du nombre de pics (N) comptés comme mesure du nombre d'ondulations.

12. Système selon la revendication 11, dans lequel le processeur (23) est agencé pour effectuer l'étape d'affichage d'un enregistrement d'image, dans lequel les ondulations comptées sont marquées.

13. Procédé de comptage d'un nombre souhaité d'ondulations dans un matériau souple,
dans lequel le procédé comprend les étapes suivantes :
a) le positionnement et l'étalement d'au moins une partie du matériau souple dans une zone de mesure sur un support ;
b) l'éclairage de la zone de mesure ;
c) la réalisation d'un enregistrement d'image de la zone de mesure ;
d) l'analyse de l'enregistrement d'image ;
e) le comptage du nombre d'ondulations dans l'enregistrement d'image ;
f) l'affichage du nombre d'ondulations comptées ;
g) répétition des étapes a) jusqu'à f) jusqu'à ce que le nombre souhaité d'ondulations corresponde au nombre d'ondulations comptées.

14. Procédé selon la revendication 13, dans lequel est utilisé le système selon l'une des revendications précédentes 1 à 12.

15. Programme informatique comprenant des instructions pour permettre au système selon l'une des revendications précédentes 1 à 12 d'effectuer au moins les étapes b) jusqu'à f) du procédé selon la revendication 13.
